# EUROPEAN PATENT SPECIFICATION

(11) **EP 3 170 872 B1**
(45) Date of publication and mention of the grant of the patent: **07.06.2023**
(21) Application number: 16002497.2
(22) Date of filing: 23.11.2016
(51) Int. Cl.: C09D 5/00

(54) **NOVEL NANOCOMPOSITES**
NEUARTIGE NANOVERBUNDSTOFFE
NOUVEAUX NANOCOMPOSITES

(30) Priority: 23.11.2015 GR 20150100507
(43) Date of publication of application: 24.05.2017
(73) Proprietor: NCSR DEMOKRITOS, 153 10 Athens (GR); Katsaros, Fotios, 153 44 Gerakas Attikis (GR); Papageorgiou, Sergios, 112 57 Kipseli Athens (GR); Sideratou, Oreozili, 153 44 Gerakas Attikis (GR); Sapalidis, Andreas, 153 41 Athens (GR)
(72) Inventor: Sideratou, Oreozili, 153 44 Gerakas Attikis (GR); Katsaros, Fotios, 153 44 Gerakas Attikis (GR); Papageorgiou, Sergios, 112 57 Kipseli Athens (GR); Sapalidis, Andreas, 153 41 Athens (GR); Baybogan Isilak, Zeynep Burcu, Istanbul (TR); Akcali, Ali, Istanbul (TR)
(74) Representative: Malamis, Alkisti-Irene

(56) References cited:
- DE-A1-102006 015 774
- US-A1- 2011 133 132

## Description

### Technical field

The invention falls into the field of nanocomposite paints with micro slime layer control properties for use in third generation fouling release coatings, i.e., floral and faunal fouling, for application on objects immersed into seawater and water in general.

### Prior art

Similarly to the damage caused by natural causes (e.g., corrosion), damage caused by biofouling on the surface of objects immersed into seawater and water in general such as boats, tanks, floating installations etc., has serious consequences on their functionality and operation of such immersed products, with pronounced effects on their hydrodynamic properties. Fouling can be classified on the basis of scale, into micro- and macro-fouling.

Fouling can consist of living organisms, their remains (organic or inorganic) or combinations thereofⁱ. Biofouling starts with the formation of a biological film-(biofilm) on the surface of the immersed object. The organisms' contact with the surface and the formation of colonies can occur either with their passive transport via water motion or with their active transport towards the surface via suitable organs developed for that purpose. When microorganisms get in contact with the surface of an immersed object, they attach by secreting extracellular polymeric substances that alter its chemical properties, and this favors further organism attachment or development. Biofilms do not necessarily consist of live organisms, but consist also of their remains or secretions". A well-developed biofilm provides the conditions necessary for the development of algae, mollusks and other organisms that constitute macro-fouling. The increased surface roughness caused by microfouling can result in an increase in fuel consumption of a boat in the range of 1 - 2%. Macro-fouling however, consisting of sea animals and plants, can result in even more detrimental effects depending on the species. While, algae for example, can cause an increase in fuel consumption of up to 10%, for mollusks this increase can reach 40%. Moreover, apart from increased fuel consumption the extensive biofouling results in corrosion. In general, biofouling is a complex problem especially after the ban on tri butyl tin (TBT) containing coatings and the introduction of speed limits.

There are two main categories of marine antifouling coatings: biocide-based antifouling coatings and fouling release coatings^{iii,iv,v,vi}.

### Biocide-based antifouling coatings

Biocide-based antifouling coatings contain active ingredients (biocides) into a polymeric matrix capable of forming coatings. Their action relies on the properties of the active material, which is released in a controllable manner so as to decrease or inhibit the formation of the fouling layer. Especially after the ban on TBT^{vii,viii.}, a multitude of substances have been used as biocides in such coatings (Benzyl-methylamide, chlorothalonil, copper pyrithione, Diuron, Fluorofolpet, Irigarol 1051, Mancozeb, Diclofluanid, Clorothalonil, Ziram, copper oxides, etc.) most of which are known pesticides. There are two main categories of biocide-based antifouling coatings: conventional, where the biocide is released gradually from the coating while the polymeric matrix remains intact and "new technology coatings" where the polymeric matrix is released together with the biocide.^{viii}

Conventional coatings action depends on the release of biocides through diffusion through the polymeric matrix with the released biocide inhibiting fouling. The release biocide inhibits biofouling until its complete removal leaving the polymetric matrix intact.

On the other hand, new technology coatings can in turn be classified into: controlled depletion polymers (hereinafter referred to as CDP) where the active substance is released in a controllable manner during the coatings' whole lifetime to kill fouling organisms and self-polishing copolymers (hereinafter referred to as SPC) where layers of the coating containing the active substance are released successively due to the action of water revealing a new layer thus regenerating the surface and inhibiting fouling.

The action of SPCs depends on the formation of two discreet moving fronts: the biocide release and the polymer removal front^{ix}. The term "self-polishing" refers to the continuous removal, hence regeneration, of the coating's outmost bioactive layer with a gradual decrease of the coating's thickness. It is characterized by controlled biocide release rate and relative stability with time for given seawater conditions. Moreover, the polymer removal rate has a linear and not exponential relationship with speed of the vessel. As a result, some release will occur even at low or zero speeds inhibiting fouling. The polymer removal rate can reach up to 15 µm per month; however, for an immersed vessel under normal conditions it is considerably lower^{xxi}. The biocide release layer is relatively stable and ranges from 10 to 20 µm^{xii}. The effective lifetime of this type of coatings has been determined in the literature to 5 years^{xiii}, while commercialising companies often raise it to 7.5 years depending on the product^{xiv}.

On the other hand CDP coatings' action is in general based on the traditional soluble matrix technology. Their difference lies in that for CDP coatings apart from natural resins, synthetic organic resins are also employed. In the presence of seawater, biocides are dissolved together with the polymeric matrix and are constantly removed from the immersed surface. The difference between CDP and SPC lies on the release mechanism which is based on hydration and solubilisation for the former and hydrolysis for the latter. The effective lifetime for CDP coatings can reach up to 36 months.

Biocide containing coatings are associated with adverse effects caused by such substances on marine organisms and the environment. For instance, thoroughly studied substances like Irigarol 1051 and Diuron were shown to exhibit toxic effects on algae zooplankton and fish accompanied by mild bioaccumulation^{xv,xvi,xvii}.

### Fouling release paints

Fouling release coatings take advantage of the forces exerted by water movement on immersed surfaces to remove biofouling or to limit its growth. Their action is dependent on two parameters: the coatings' resistance to attachment and the ease of the formed biofouling layer removal. Organisms responsible for biofouling find it difficult to attach on these low energy surfaces, or they easily detach with water flow associated with the vessels' movement^{xviii}. Fouling release coatings are suitable for vessels exceeding certain speeds and staying. idle only for small periods of time. Such coatings are usually based on crosslinked polydimethylsiloxane (PDMS) and contain additives for the enhancement of their non-sticking properties. Fluoropolymer fouling release coatings can contain oils with fluorinated acrylate polymers, perfluoropolyether polymers, and poly (ethylene glycol) fluoropolymers^{xix}. Studies have shown that apart from the surface properties of these materials, their fouling release performance is affected by coating thickness as coatings of less than 100 µm dry film thickness allow organisms with cutting force such as barnacles to penetrate into the hard primer layer, compromising the integrity of the film^{xx}. On the other hand, for a coating of adequate thickness, fouling release properties will only depend on the nature of its surface. Moreover, as most coatings of this type are elastomers, they suffer from poor mechanical properties and are prone to damage from abrasion or scraping when in contact with hard surfaces (e.g., during mooring).^{xix} Other types of coatings such as conventional biocide-based coatings are not so much affected by this type of damage, as their action does not rely on their surface properties.

The nanocomposite materials described for the first time in the present invention exhibit microslime layer control properties and are readily applicable in third generation fouling release coatings. These nanocomposite materials are based on epoxy resins and can be prepared by simple mixing of two component epoxy resins and a suitably modified hardener.

The following documents are known in the art, but they do not solve the problem that the present invention addresses.
US 2011/133132 A1 (ZGAMU ARUNA [US] et al) describes a chemically functionalized submicron graphitic fibril, focusing only on the mechanical strength and the thermal conductivity of the produced MW-CNTs/epoxy composites. This document does not make any allusion whatsoever to solving the problem that is successfully addressed with the present invention, no use on submerged surfaces is described or even hinted. Furthermore, the term "micro slime layer control" is not referred at all in this.
DE 10 2006 015774 A1 (CONSTR RES & TECH GMBH [DE] describes the development of a dual aqueous component hybrid reactive epoxy-based system with several applications. However, this document does not state any use of the aqueous hybrid epoxy system as fouling release coating or coatings that can prevent micro slime control layer formation on submerged surfaces. Moreover, the terms "micro slime layer control" or "fouling release paints" are not referred at all in this document also.
Moreover, it should be noted that in the present invention the hydrophobic functionalized fillers alone provide the fouling release properties of the coatings preventing the formation of micro slime layer, without using any additives such as biocides. Also, the absence of biocides is in itself novel and inventive.

### Brief description of invention

The present invention describes the development of novel nanocomposite fouling release materials prepared by simple, two-component mixing: one epoxy resin and one appropriately modified hardener. Modified hardeners employed in the present invention are commercial hardeners containing hydrophobic functionalized nanoparticles based on symmetric or asymmetric hyperbranched dendritic polymers as well as modified inorganic nanoparticles. In the present invention, "dendritic polymers" refer to dendrimers or hyperbranched dendritic polymers and "inorganic nanoparticles" refer to metal nanoparticles or metal oxide nanoparticles and their combinations. Both polymeric and inorganic nanoparticles are modified with appropriate lipophillic groups. These novel nanocomposite materials exhibit micro slime layer control properties and are highly effective for use in marine fouling release coatings, namely on objects immersed in water.

The invention is described with reference to the following examples and tables, which must not be considered as limiting but rather as indicative and explanatory.

### Detailed description of the invention and examples

The development of new nanocomposite paints for application in floral and faunal fouling release coatings comprise two main ingredients: at least one epoxy resin and at least one modified hardener.

Specifically, the present invention describes nanocomposite paints with micro slime layer control properties in the form of fouling release coatings, which are two-part epoxy coatings where the first part is the epoxy resin (component A) and the second part is the curing agent (hardener) which contains aromatic- and/or alkyl- functionalized polyamines (component B) , where the hardener is modified with
- hydrophobic nanoparticles based on hyperbranched dendritic polymers with symmetric or asymmetric architecture or
- inorganic nanoparticles decorated with hydrophobic moieties,
   characterized in that the hydrophobic polymeric nanoparticles used to modify component B, comprise functionalized dendritic polymers with symmetrical or asymmetrical architecture, derived from commercially available dendritic polymers, such as:
   - Hyperbranched polyethylenimine with molecular weight 400-750.000 Da,
   - Diaminobutane propyleneimine dendrimers (DAB) with molecular weight 200-7.000 Da,
   - Poly(amido amine) (PAMAM) dendrimers with molecular weight 200-150.000 Da,
   - Hyperbranched dendritic Polyglycerols with molecular weight 200-100.000 Da
   - Hyperbranched dendritic polyesters with molecular weight 200-200.000 Da
   - other dendritic polymers exhibiting similar characteristics,
   which are functionalized with hydrophobic groups such as alkyl chains with 8 to 22 carbon atoms or fluoroalkyl chains with 11 to 45 fluoro atoms or other hydrophobic groups, at 40-100% molecular coverage,
   wherein such nanocomposite paints are used as fouling release coating applied to objects submerged in water such as the vessel hulls, sea platforms, bridge, underwater structures (e.g., propeller, aquaculture chambers,), etc.

It is advantageous that the nanocomposite fouling release paints of the present invention comprise nanoparticles at a percentage ranging from 0.5% to 40%.

Preferably, in the nanocomposite fouling release paints of the present invention the component A and the component B are mixed at a weight ratio ranging from 1: 0.5 to 1: 2.

It is advantageous that the nanocomposite fouling release paints of the present invention have final viscosity 1200-1600 mPa.s.

It is particular advantageous that in the nanocomposite fouling release paints of the present invention the hydrophobic inorganic nanoparticles that are used for component B modification, comprise metal or metal oxide nanoparticles or mixed metal oxide nanoparticles, which contain hydrophobic groups such as alkyl chains with 8 to 22 carbon atoms or fluoroalkyl chains with 11 to 45 fluoro atoms or other hydrophobic groups, at 40-100% molecular coverage.

Preferably, in the nanocomposite fouling release paints of the present invention the functionalized dendritic polymer that is used to modify component B can be hydrophobic nanoparticles based on:
- the alkylated hyperbranched polyethyleneimine (A-PEI) or
- the perfluoroalkylated hyperbranched polyethyleneimine (F-PEI) or
- derivatives of the alkylated polyethyleneimine bearing guanidinium groups (G-A-PEI) or
- derivatives of the alkylated hyperbranched polyethyleneimine bearing oligoethylenoglycol groups (OEG-A-PEI) or
- derivatives of the alkylated hyperbranched polyethyleneimine bearing Quaternary ammonium groups (Q-A-PEI),
or can be amphiphilic nanoparticles based on
- the alkylated hyperbranched polyglycerol (A-PG) or
- the perfluoroalkylated hyperbranched polyglycerol (F-PG),
- while the inorganic nanoparticles that used to modify the component B can be
- silica nanoparticles functionalized with perfluoroalkyl chains (F-silica) or
- silica nanoparticles functionalized with alkylated quaternary ammonium groups (Q-silica 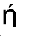
- Polyhedral oligomeric silsesquioxane functionalized with lipophilic groups (A-POSS) or
- Halloysites inorganic nanotubes functionalized with perfluoroalkyl chains (F-Hal) or
- Halloysites inorganic nanotubes functionalized with alkylated quaternary ammonium groups (Q-Hal).

It is advantageous that in the nanocomposite fouling release paints of the present invention where the component A
- is epoxy resin which is derivative of bisphenol A or bisphenol F,
- can contain or cannot contain additives, which can be phthalocyanine blue or carbon black or talc or calcium phosphate or titanium oxide or any organic solvent compatible with the epoxy resin such as xylene, benzyl alcohol, etc.

Preferably, the use of the nanocomposite fouling release paints of the present invention can be applied by spray gun or roll or brush and the coating thickness is varied from 50 to 70 µm after curing (dry layer) and the critical surface energy is varied from 10 to 23 mN/m.

### Epoxy resins

In the present invention an epoxy resin or a mixture of at least two epoxy resins is employed for the purpose of obtaining nanocomposite materials with the desired viscosity prior to polymerization and the desired mechanical properties of the resulting fouling release coatings after curing. These epoxy resins contain at least one and usually two functional groups i.e., epoxide groups per molecule, also sometimes referred to as oxirane groups. If an oxirane group is located at the distal end of the molecule then this group constitutes part of a glycidol group. Epoxy resins contain at least one and usually at least two oxyrane groups per molecule. For example, epoxy resins contain 1 to 10, 2 to 10, 1 to 6, 2 to 6, 1 to 4 or 2 to 4 oxyranes per molecule. The remaining part of the resin molecule, i.e., apart from the oxyrane group, can be aromatic, aliphatic or combinations thereof and can be linear, branched, cyclic or a combination thereof. The aromatic or aliphatic parts of the resin molecule can contain heteroatoms or other groups that do not react with the oxyrane. For example, epoxy resins can contain halogens, oxygen containing groups such as ethers, sulphur containing groups such as sulphated ethers, carbonyl groups, carboxy groups, amide groups, phosphate groups, sulphate or sulfide groups, nitrate and nitride groups as well as other similar functional groups.

The epoxy resins molecular weight can range from 100 grams per mole to 50.000 grams per mole for polymeric resins.

Epoxy resins that may be employed are usually liquid at room temperature (around 20°C to around 30°C). However, they can be dissolved in water or organic solvents such as xylene, toluene, benzene, benzyl alcohol isopropanol, ethyl alcohol, methanol, and other similar solvents.

In most cases, epoxy resins are ether derivatives of glicydol. These derivatives are substituted with aromatic, aliphatic groups or their combination and can be linear, branched, cyclic or a combination thereof and may also contain halogens, oxygen containing groups such as ethers, sulphur containing groups such as sulphated ethers, carbonyl groups, carboxy groups, amide groups, phosphate groups, sulphate or sulfide groups, nitrate and nitride groups as well as other similar functional groups. Those epoxy resins may contain at least one but could contain 2 to 10, 2 to 6, or 2 to 4 glicydole groups per molecule.

Typical but not exclusive examples of this category are ether derivatives of diglycidol potentially containing aryl groups or one aryl- combined with an alkyl- or heteroalkyl- group or both. Moreover, they may contain halogens, oxygen containing groups such as ethers, sulphur containing groups such as sulphated ethers, carbonyl groups, carboxy groups, amide groups, phosphate groups, sulphate or sulfide groups, nitrate and nitride groups as well as other similar functional groups. These resins are synthesized by interaction of an aromatic compound containing at least two hydroxyl- groups or an excess of epichlorohydrine. Some typical but not exclusive examples of aromatic compounds containing at least two hydroxyls include catechol, hydrokinone, p,p'-dihydroxy-dibenzylester, p,p'-dihydroxy -benzophenone, p,p'-dihydroxy - phenylsulphone. Other examples could include 2,2' or 2,3' or 2, 4' or 3, 3' or 3, 4' or 4,4' isomers of dihydroxy-diphenylmethane, dihydroxy-diphenyl-dimethyl-methane, dihydroxy-dipheny-ethyl-methyl-methane, dihydroxy-diphenyl-methyl-propyl-methane, dihydroxy-diphenylethyl-phenyl-methane, dihydroxy-diphenyl-propyl-phenyl-methane, dihydroxy-diphenyl-butylphenyl-methane, dihydroxy-diphenyl-toluene-ethane, dihydroxy-diphenyl-toluene-methyl-methane, dihydroxy-diphenyl -dicyclohexane-methane and dihydroxy-diphenyl-cyclohexane.

Some commercially available resins of this type are the ones derived from Bisphenol A (4,4'- dihydroxy-biphenyl-methane). Some indicative but not exclusive examples of commercially available resins suitable for use in this invention are the following: (a) resins under the commercial name EPON (e.g. EPON-828, EPON-872 and EPON-1001) of Hexion Speciality Chemicals, Inc. USA, (b) resins under the commercial name DER (e.g. DER-331, DER-332 and DER-336) of Dow Chemical Co, (c) resins under the commercial name EPICLON (e.g. EPICLON 850) of Dainippon Ink and Chemicals and (d) resins under the commercial name Epokukdo (e.g. Epokukdo-YD-114E, Epokukdo-YD-1228, Epokukdo-YD-134) Kukdo Chemicals.

Moreover, commercially available resins of this type are the ones deriving from bisphenol F (2,2'- dihydroxy-biphenyl-methane). Some indicative but not exclusive examples of commercially available resins suitable for use in this invention are the following: (a) resins under the commercial name Epokukdo (e.g. Epokukdo-YDF-165) of Kukdo Chemicals, (b) resins under the commercial name DER (e.g. DER-334) of Dow Chemical Co, (c) resins under the commercial name EPICLON (e.g. EPICLON 830) of Dainippon Ink and Chemicals and (d) resins under the commercial name MAREPOKS (e.g. MAREPOKS 1720, MAREPOKS 1784, MAREPOKS 1792, MAREPOKS 8001/75) of KIMAR.

Other resins are the ether derivatives of diglycidol derived from the diol of polyalkyl-glycol. These derivatives are substituted with heteroalkenes containing oxygen heteroatoms. The polyalkyl-glycol part can be polymers or copolymers and often contain alkyl groups of 1 to 4 carbon atoms. Some typical but not exclusive examples can be ethers of diglycidol with the polyethyleneoxide or polypropyleneoxide or polytetramethyleneoxide diols. Some indicative but not exclusive examples of commercially available resins suitable for use in this invention are resins produced by Polysciences, Inc, PA such as the ones derived from the polyethyleneoxide or polypropyleneoxide diols with 400, 600 and 1000 grams per mole molecular weight.

For certain applications novolac epoxy resins are used, ether derivatives of glycidol and phenolic novolac resins. Phenolic novolac resins occur following reaction of phenols and an excess of formaldehyde under acidic conditions. Novolac epoxy resins occur following reaction between phenyl novolac resins with perchlorhydrine in the presence of sodium hydroxide. Usually, novolac epoxy resins contain at least two oxyrane groups and are used for the production of highly branched coatings.

Some indicative but not exclusive examples of commercially available novolac resins suitable for use in this invention are the following: (a) resins under the commercial name ARALDITE (e.g. ARALDITE PY340-2, ARALDITE PY 302-2, ARALDITE PZ 3961, ARALDITE GY 250, ARALDITE GY 253, ARALDITE EPN1 183, ARALDITE EP1 179, ARALDITE EPN1 139 και ARALDITE EPN1 138) of Huntsman Advanced Materials, (b) resins under the commercial name EP ALLOY (e.g., EP ALLOY 8230) of CVC Thermoset Specialties and (c) resins under the commercial name DEN (e.g., DEN 424 and DEN 431) of Dow Chemical.

Moreover, resin mixtures can be used, in order to obtain coatings of suitable viscosity and other technical characteristics. The mixture can contain at least one low viscosity and one high viscosity resin.

Some indicative but not exclusive examples of commercially available novolac resins suitable for use in this invention are the following: (a) resins under the commercial name HELOXY MODIFIER (.e.g. HELOXY MODIFIER 107) of Hexion Specialty Chemicals, (b) resins under the commercial name EPODIL (e.g. EPODIL 757, EPODIL 746, EPODIL 747, EPODIL 748) of Air products and Chemicals Inc.

### Hardeners

Final coatings occur after polymerization/crosslinking of the epoxy resins with suitable compounds known as hardeners. Hardeners constitute the second ingredient of coatings and consist of at least two primary amines or at least two secondary amines or at least one primary and one secondary amine and their combinations.

Specifically, hardeners contain at least two functional groups of the -NHR type where R could be a proton, alkyl, aryl or alkylaryl goup. Alkyl groups can consist of 1 to 12 carbon atoms and can be cyclic, branched or combinations thereof. On the other hand, aryl groups can consist of 6 to 12 carbon atoms in phenyl or biphenyl groups. Alkylaryl functional groups can be alkyl groups substituted with aryl- or aryl groups substituted by alkyl groups. Alkyl and aryl groups described above apply also in the case of alkyl-aryl groups.

Moreover, the hardener can also contain other groups such as heteroalkylenes or a combination of alkylenes and heteroalkylenes. Heteroalkylenes can contain at least one oxygen containing goup or one thiol group or a secondary amine substituted by two alkyl groups. Heteroalkylenes can consist of 2 to 50 carbon atoms and 2 to 10 aminogroups. Typical but not exclusive examples of hardeners containing alkyl groups can be the ethylenodiamino diethylenodiamino, diethylenotriamino, triethylenotetramino, propylenodiamino, tetramethylenopentamino, hexaethylenoheptamino, hexamethylenodiamino, 2-methyl-1,5 pentamethylenodiamino, 1-amino-3 methylamino-3,3,5-trimethylcyclohexane also known as isophorenediamine, 1,3,-dimethylamino-cyclohexane and other similar groups. Moreover, some indicative but not exclusive examples of hardeners consisting of heteroalkylic groups can be: (a) ethyleneaminopiperazine derivatives, (b) 4,7,10-trioxatridecan-1,13-diamine (TTD) derivatives, a commercial product of TCI America, or diamino polyalkylenoxides (e.g., diamino polyethylene oxide, diamino polypropyleneoxide or their copolymers, commercial products of Huntsman Corporation under the name JEFF AMINE).

Moreover, the hardener can contain aromatic compounds substituted with polyamino groups or groups containing amine or amide functional groups. Such typical but not exclusive examples are diaminoxylene (e.g., meta-diamino xylene) derivatives or polyamidoamine derivatives or derivatives of similar structures.

Some indicative but not exclusive examples of commercially available hardeners suitable for use in this invention are the following: (a) hardeners under the commercial name ANCAMINE (e.g., ANCAMINE 2609) of Air Products and Chemicals Inc, (b) hardeners under the commercial name ARADUR (e.g., ARADUR 2965, ARADUR 340, ARADUR 36) of Huntsman Advanced Materials, (c) hardeners under the commercial name KISAMID (e.g., KISAMID 1062, KISAMID 1034, KISAMID 1043, KISAMID 1125) of KIMAR and (d) hardeners under the commercial name Uni-Rez (e.g., Uni-Rez 2115, Uni-Rez 2141, Uni-Rez 2415) of ARIZONA Chemicals.

The final fouling release coatings are derived after mixing of the first (epoxy resin) and the second (hardener) component where primary and secondary amines react with oxyrane groups. The oxyrane ring opening results in covalent bond formation between epoxy resin and hardener. In the resulting-OCH₂CH₂NR- covalent bond, R may refer to a proton, alkyl, aryl or alkylaryl group. The final coatings resulting after mixing contain at least 5% w/w hardener and at least 20% w/w resin. The epoxy resin/hardener ratio may range from 1:0.5 to 1:2.

### Synthesis examples

Below, some examples are given for syntheses of novel nanocomposite fouling release paints arising from a simple two-component mixing of one epoxy resin and one modified hardener.

Initially, we describe the syntheses of hydrophobic modified nanoparticles based on functionalized symmetric or asymmetric hyperbranched dendritic polymers as well as modified inorganic nanoparticles, used in the present invention for the modification of commercially available hardeners.

### Synthesis of hydrophobic nanoparticles based on alkylated polyethyleneimine (A-PEI).

One part of hyperbranched dendritic polyethyleneimine MW 5000 Da or 25000 Da is dissolved in dry chloroform in the presence of 400 parts triethylamine and is cooled in an ice bath. 80 or 200 parts of n-dodecyl isocyanate or n-tetradecyl isocyanate or n-hexadecyl isocyanate or n-octadecyl isocyanate are dissolved in dry chloroform and added slowly under stirring in Ar atmosphere. 30 mins following addition, the solution is left to reach room temperature and is kept under stirring for a few hours. The reaction product precipitates in acetonitrile and is collected by centrifugation or filtration. It is then washed several times with acetonitrile, centrifuged again and dried. The structure of the A-PEI products is confirmed by ¹H NMR spectroscopy. The degree of substitution as determined by NMR spectroscopy ranges from 60 to 75%.

### Synthesis of hydrophobic nanoparticles based on fluoroalkylated polyethyleneimine (F-PEI).

One part of hyperbranched dendritic polyethyleneimine MW 5000 Da or 25000 Da is dissolved in dry dimethylformamide and methanol containing 80 or 400 parts triethylamine. Subsequently, 40 or 200 parts perfluorooctanoic acid, 40 or 200 parts of N-hydroxy benzotriazole (HOBt) and 40 or 200 parts N,N,N',N'-Tetramethyl-O-(1H-benzotriazol-1-yl)uronium hexafluorophosphate are added and the mixture is kept under stirring for several hours at room temperature. Upon the end of the reaction, the solvents are removed and the solid fraction is dissolved in acetonitrile. The reaction product precipitates with diethylether and is collected by centrifugation and drying. The structure of the F-PEI products is confirmed by ¹H NMR spectroscopy. The degree of substitution as determined by NMR spectroscopy ranges from 70 to 90%.

### Synthesis of hydrophobic nanoparticles based on derivatives of alkylated polyethyleneimine containing guanidinium groups (G-A-PEI).

The guanidinylated derivatives of hyperbranched dendritic polyethyleneimine were prepared as described in analogous manner in the literature[^{xxi}]. Specifically, one part of alkylated hyperbranched dendritic polyethyleneimine, MW 5000 Da or 25000 Da (substituted with 12, 14, 16, 18 carbon atom chains) (A-PEI), dissolved in chloroform, is added in a chloroform solution containing 20 or 200 parts 1H-pyrazol-carboxamidine hydrochloride and 80 or 400 parts triethylamine, respectively. The mixture is kept at room temperature under stirring for 24 hours under inert gas atmosphere. The reaction product precipitates in acetonitrile and is collected by centrifugation and drying. The structure of the G-A-PEI products is confirmed by ¹H NMR spectroscopy. The degree of substitution as determined by NMR spectroscopy ranges from 25 to 40%.

### Synthesis of hydrophobic nanoparticles based on derivatives of alkylated polyethyleneimine containing oligoethyleneglycol groups (OEG-A-PEI).

The alkylated dendritic polyethyleneimine derivatives containing oligoethyleneglycol groups are prepared as follows: one part of alkylated hyperbranched dendritic polyethyleneimine, MW 5000 Da or 25000 Da, substituted with 12, 14, 16, 18 carbon atom chains (A-PEI), is dissolved in chloroform containing 80 or 400 parts triethylamine. N-hydroxy benzotriazole (HOBt) and 40 or 200 parts N,N,N',N'-Tetramethyl-O-(1H-benzotriazol-1-yl)uronium hexafluorophosphate are added and the mixture is kept under stirring for several hours at room temperature. The reaction product precipitates with acetonitrile and is collected by centrifugation and drying. The structure of the OEG-A-PEI products is confirmed by ¹H NMR spectroscopy. The degree of substitution of oligoethyleneglycol groups as determined by NMR spectroscopy ranges from 25 to 40%.

### Synthesis of hydrophobic nanoparticles based on derivatives of alkylated polyethyleneimine containing quaternary ammonium groups (Q-A-PEI).

The alkylated dendritic polyethyleneimine derivatives containing quaternary ammonium salts are prepared in analogous manner as described in the literature^{xxii}: Specifically one part of alkylated hyperbranched dendritic polyethyleneimine MW 5000 Da or 25000 Da, substituted with 12, 14, 16, 18 carbon atom chains (A-PEI), is dissolved in chloroform containing 80 or 400 parts triethylamine. 20 or 200 parts of (2,3-Epoxypropyl)trimethylammonium chloride is then added. The reaction product precipitates in acetonitrile and is collected by centrifugation and drying. The structure of the Q-A-PEI products is confirmed by ¹H NMR spectroscopy. The degree of substitution of quaternary ammonium groups as determined by NMR spectroscopy ranges from 25 to 40%.

### Synthesis of amphiphilic nanoparticles based on alkylated hyperbranched polyglycerol (A-PG).

One part of hyperbranched dendritic polyglycerol MW 5000 Da or 8000 Da is dissolved in dry dimethylformamide in the presence of 150 parts triethylamine and is cooled in an ice bath. 80 or 120 parts lauroyl or myristoyl or palmitoyl or stearoyl chloride dissolved in dry dimethylformamide are added dropwise under constant stirring in Ar atmosphere. The solution is kept cold under stirring for 1 hour, then left to reach room temperature and subsequently kept at 50-60°C under stirring for several hours. The reaction mixture is left to cool down and the resulting precipitate is collected by filtration, then dissolved in chloroform and subsequently precipitated in acetonitrile. The final product is collected by centrifugation or filtration and then dried. The structure of the A-PG products is confirmed by ¹H NMR spectroscopy. The degree of substitution as determined by NMR spectroscopy ranges from 60 to 80%.

### Synthesis of amphiphilic nanoparticles based on fluoroalkylated hyperbranched polyglycerol (F-PG).

One part of hyperbranched dendritic polyglycerol MW 5000 Da or 8000 Da is dissolved in dry dimetylformamide in the presence of 150 parts triethylamine and is cooled in an ice bath. 80 or 120 parts perfluoro-octanoyl chloride are dissolved in dry dimethylformamide are added dropwise under constant stirring in argon atmosphere. The solution is kept cold under stirring for 1 hour, then left to reach room temperature and subsequently kept at 50-60°C under stirring for several hours. The reaction mixture is left to cool down and the resulting precipitate is collected by filtration, then dissolved in chloroform and subsequently precipitated in diethylether. The final product is collected by centrifugation or filtration and then dried. The structure of the F-PG products is confirmed by ¹H NMR spectroscopy. The degree of substitution as determined by NMR spectroscopy ranges from 70 to 80%.

### Synthesis of inorganic silica nanoparticles modified with perfluoroalkyl goups (F-silica).

Silica nanoparticles bearing perfluoroalkyl groups (F-silica) were prepared in analogous manner as described in the literature ^{xxiii} Specifically, a 1,5 mL/gr solution of hyperbranched dendritic polyethyleneimine (MW 5000 Da) in a 50 mM p*H*=7.4 buffer solution is prepared. *Tris* (Tris-hydroxymethyl-aminomethane) or a phosphate buffer can be employed for this purpose. In 5 ml of the as prepared solution, a 1mM tridecylfluoro-1,1,2,2-tetrahydrooctano-silicic acid and an orthosilicic acid solution are added in ratios ranging from 0,1:1 to 10:1 occurring from hydrolysis of tridecylfluoro-1,1,2,2-tetrahydrooctano-silicic acid and orthosilicic acid tetraethylesters respectively with 1 mM trifluoroacetic acid for 30mins. The nanoparticles formation is instant. The mixture is left to react for about 15mins. The products are collected after centrifugation, then washed with water and ethanol for the removal of the excess of reactants and potential byproducts and dried. The degree of substitution with fluoroalkyl chains ranges from 20 to 90% depending on the ratio of the reactants employed.

### Synthesis of inorganic silica nanoparticles modified with lipophilic quaternary ammonium groups (Q-silica).

Silica nanoparticles bearing lipophilic quaternary ammonium groups (Q-silica) were prepared as described for F-silica nanoparticles but apart from orthosilicic acid, the ammonium salt of octadecyl-dimethyl-(3-trimethoxy-propyl-silicic) acid was employed as a silica forming reagent. The degree of substitution with lipophilic ammonium salt groups ranges from 40 to 100%.

### Synthesis of polyhedral oligomeric silsesquioxane nanoparticles modified with lipophilic groups (A-POSS).

One part of commercially available polyhedral oligomeric silsesquioxane, POSS modified with epoxy groups are dispersed in dry chloroform containing 16 parts of triethylamine. 8 parts of aliphatic primary amine of 12 or 14 or 16 or 18 carbon atoms are then added into the dispersion at room temperature in argon atmosphere. The mixture is kept under stirring for several hours. The final A-POSS products are collected with centrifugation and drying. The degree of nanoparticles substitution with lipophilic aliphatic chains ranges from 80 to 100%.

### Synthesis of inorganic nanotubes modified with perfluoroalkyl groups (F-Hal).

The modified inorganic nanotubes are synthesized in analogous manner as described to the literature.^{xxiv} Specifically one part of commercially available inorganic nanotubes (halloysites) are dispersed in a 30% aqueous hydrogen peroxide solution and are kept under stirring at 80 °C for several hours. They are subsequently collected with centrifugation, are washed with ethanol, then several times with toluene and finally dispersed in toluene. In this dispersion, 4% v/v tridecylfluoro-1,1,2,2-tetrahydrooctanosilicic acid tetraethylester is added and the mixture is kept under stirring at 110 °C for several hours. The final F-Hal product is collected with centrifugation, then washed with ethanol and dried at 40°C under vacuum. The degree of nanoparticles substitution with perfluoroalkyl groups ranges from 50 to 80%.

### Synthesis of inorganic nanotubes modified with lipophilic quaternary ammonium groups (Q-Hal).

Inorganic nanotubes bearing lipophilic quaternary ammonium groups (Q-Hal) are prepared in analogous process as described for F-Hal nanoparticles,^{xxiv} but in this case, the ammonium salt of octadecyl-dimethyl-(3-trimethoxy-propyl-silicic) acid was employed as the modifying reagent. The degree of substitution with lipophilic ammonium groups ranges from 60 to 90%.

### A. Synthesis of nanocomposite paints without additives for fouling release coatings

Nanocomposite paints without additives for fouling release coatings consist of two ingredients:
(A) The first ingredient (component A) contains 40 gr bisphenol A derivative epoxy resin (70% in xylene) and
(B) The second ingredient (component B) contains 20 gr hardener containing polyamines substituted with aromatic compounds (30 % in xylene). Hydrophobic modified nanoparticles based on functionalized dendritic polymers as well as modified inorganic nanoparticles such as the ones mentioned previously are added to this component.

Subsequently, the two components are mixed in ratios ranging from 1:0.25 to 1:2. The viscosity of the final material is tuned at 1200-1500 mPa.s via addition of suitable quantity of solvent depending on the application. The paint is coated on a suitably primed surface by means of a spray gun or roll or brush. The curing of the two components takes place at room temperature for 24 hours at 28 °C and 40% humidity. The curing is complete within 15 days. The curing can take place at a minimum temperature of 15 °C and 80% maximum humidity but time increases to 48 hours. The final coating thickness ranges from 50 to 70 µm after curing (dry surface).

In tables 1 and 2 some indicative, but not exclusive, examples of as prepared nanocomposite paints without additives for fouling release coatings are given.

**Table 1. Examples of nanocomposite paints without additives containing hydrophobic polymeric nanoparticles for fouling release coatings.**

| **Example** | **Component A** | **Component B** | **Polymeric Nanoparticles** | **Nanoparticles content (%) in component B** |
|---|---|---|---|---|
| 1 | Epokukdo YD-011 | Uni-Rez 2125 | A-PEI | 1.75% |
| 2 | Epokukdo YD-011 | Uni-Rez 2125 | A-PEI | 3.5% |
| 3 | Epokukdo YD-011 | Uni-Rez 2125 | A-PEI | 7% |
| 4 | Epokukdo YD-011 | Uni-Rez 2125 | A-PEI | 14% |
| 5 | Epokukdo YD-011 | Uni-Rez 2125 | G-A-PEI | 3.5% |
| 6 | Epokukdo YD-011 | Uni-Rez 2125 | G-A-PEI | 7% |
| 7 | Epokukdo YD-011 | Uni-Rez 2125 | Q-A-PEI | 3.5% |
| 8 | Epokukdo YD-011 | Uni-Rez 2125 | Q-A-PEI | 7% |
| 9 | Epokukdo YD-011 | Uni-Rez 2125 | F-PEI | 3.5% |
| 10 | Epokukdo YD-011 | Uni-Rez 2125 | F-PEI | 7% |
| 11 | Epokukdo YD-011 | Uni-Rez 2125 | A-PG | 3.5% |
| 12 | Epokukdo YD-011 | Uni-Rez 2125 | A-PG | 7% |
| 13 | Epokukdo YD-011 | Uni-Rez 2125 | A-PG | 14% |
| 14 | Epokukdo YD-011 | Uni-Rez 2125 | OEG-A-PEI | 7% |
| 15 | Epokukdo YD-011 | Uni-Rez 2125 | F-PG | 7% |
| 16 | Epokukdo YD-011 | Uni-Rez 2125 | F-PG | 14% |

**Table 2. Examples of nanocomposite paints without additives containing hydrophobic inorganic nanoparticles for fouling release coatings.**

| **Example** | **Component A** | **Component B** | **Inorganic Nanoparticles** | **Nanoparticles content (%) in component B** |
|---|---|---|---|---|
| 17 | MAREPOKS 1784 | KISAMID 1062 | F-silica | 7% |
| 18 | MAREPOKS 1784 | KISAMID 1062 | F-silica | 14% |
| 19 | MAREPOKS 1784 | KISAMID 1062 | Q-silica | 7% |
| 20 | MAREPOKS 1784 | KISAMID 1062 | Q-silica | 14% |
| 21 | MAREPOKS 1784 | KISAMID 1062 | A-POSS | 7% |
| 22 | MAREPOKS 1784 | KISAMID 1062 | F-Hal | 7% |
| 23 | MAREPOKS 1784 | KISAMID 1062 | Q-Hal | 7% |
| 24 | MAREPOKS 1784 | KISAMID 1062 | Q-Hal | 14% |

### B. Synthesis of nanocomposite paints with additives for fouling release coatings

Nanocomposite paints with additives for fouling release coatings consist of two ingredients:
(A) The first ingredient (component A) contains 80 gr of a bisphenol A derived epoxy resin as well as other additives such as phthalocyanine Blue or carbon black, talc, calcium phosphate and titanium oxide and solvents such as xylene, benzyl alcohol.
(B) The second ingredient (component B) contains 20 gr of hardener containing polyamines substituted with aromatic compounds (30% in xylene).

Various ratios of hydrophobic modified nanoparticles based on functionalized dendritic polymers of symmetric or asymmetric architecture as well as modified inorganic nanoparticles such as the ones mentioned previously are added to this component.

Subsequently, the two components are mixed in ratios ranging from 1:0,25 to 1:2. The viscosity of the final paint is tuned at 1200-1500 mPa.s via addition of suitable quantity of solvent depending on the application. The paint is coated on a suitably primed surface by means of a spray gun or roll or brush. The curing of the two components takes place at room temperature for 24 hours at 28 °C and 40% humidity. The curing is complete within 15 days. The curing can take place at a minimum temperature of 15 °C and 80% maximum humidity but time increases to 48 hours. The final coating thickness is 50-70 µm after curring (dry surface).

In tables 3 and 4 some indicative but not exclusive examples of as prepared nanocomposite paints with additives for fouling release coatings are given.

**Table 3. Examples of nanocomposite paints with additives containing hydrophobic polymeric nanoparticles for fouling release coatings.**

| **Example** | **Component A** | **Component B** | **Polymeric nanoparticles** | **Nanoparticles content (%) in component B** |
|---|---|---|---|---|
| 25 | Epokukdo YD-011/ Phthalocyanine Blue | Uni-Rez 2125 | A-PEI | 7% |
| 26 | Epokukdo YD-011/ Phthalocyanine Blue | Uni-Rez 2125 | A-PEI | 14% |
| 27 | Epokukdo YD-011/ carbon black | Uni-Rez 2125 | A-PEI | 7% |
| 28 | Epokukdo YD-011/ carbon black | Uni-Rez 2125 | A-PEI | 14% |
| 29 | Epokukdo YD-011/ Phthalocyanine Blue | Uni-Rez 2125 | F-PEI | 7% |
| 30 | Epokukdo YD-011/ Phthalocyanine Blue | Uni-Rez 2125 | A-PG | 7% |

**Table 4. Examples of nanocomposite paints with additives containing hydrophobic inorganic nanoparticles for fouling release coatings.**

| **Example** | **Component A** | **Component B** | **Inorganic Nanoparticles** | **Nanoparticles content (%) in component B** |
|---|---|---|---|---|
| 32 | MAREPOKS 1784/ Phthalocyanine Blue | KISAMID 1062 | F-silica | 7% |
| 33 | MAREPOKS 1784/ Phthalocyanine Blue | KISAMID 1062 | F-silica | 14% |
| 34 | MAREPOKS 1784/Phthalocyanine Blue | KISAMID 1062 | Q-silica | 7% |
| 35 | MAREPOKS 1784/ Phthalocyanine Blue | KISAMID 1062 | Q-silica | 14% |

### Characterization of fouling release coatings

The nanocomposite paints were applied by means of a spray gun on suitably primed metal plates forming smooth and stable surfaces. The fouling release coatings are studied regarding their hydrophobicity, mechanical properties and easiness of marine fouling removal. The commercially available Intersleek Pro product (International co.) was also tested for comparison purposes. The as prepared coatings were left in ambient conditions for 15 days for completion of chemical crosslinking/polymerization (curing).

### Hydrophobicity of fouling release coatings.

The painted surface characterization aims at determining their hydrophobic properties as well as their critical surface energy according to the Zisman method^{xxv}.

This characterisation is based on literature evidence correlating fouling organisms attachment with critical surface energy.^{xxvi}

Measurements were performed with a CAM-100 contact angle measurement instrument (KSV co) at 25±1 °C and 50±2 % relative humidity according to the method of the static droplet on a flat surface.

Water (H₂O), ethyleneglycol (C₂H₆O₂), propylenoglycol (C₃H₈O₂) and dodecane (C₁₂H₂₆) were used as probe liquids with surface tension values 72.8, 47.3, 45.6, and 25.35 mN/m, respectively. For successful measurements, R² values obtained from the Zisman analysis should exceed 0.995. Tables 5 and 6 show the contact angle and critical surface energy values of the examined coatings.

**Table 5. Hydrophobicity and critical surface energy results for nanocomposite fouling release coatings without additives that contain modified nanoparticles.**

| **Example** | **H₂O contact angle(°)** | **Critical Surface Energy (mN/m)** |
|---|---|---|
| 1 | 102.00 | 19.60 |
| 2 | 104.50 | 19.00 |
| 3 | 102.8 | 18.67 |
| 4 | 101.00 | 18.80 |
| 5 | 103.6 | 19.21 |
| 6 | 106.12 | 18.83 |
| 7 | 104.5 | 18.72 |
| 8 | 106.65 | 18.51 |
| 9 | 102.90 | 22.27 |
| 10 | 109.92 | 17.18 |
| 11 | 106.80 | 14.79 |
| 12 | 104.20 | 16.79 |
| 13 | 107.95 | 17.62 |
| 14 | 101.00 | 18.80 |
| 15 | 104.58 | 17.70 |
| 16 | 107.17 | 17.05 |
| 17 | 96.06 | 14.31 |
| 18 | 100.95 | 13.92 |
| 19 | 98.81 | 22.35 |
| 20 | 103.00 | 21.98 |
| 21 | 103.41 | 21.53 |
| 22 | 105.7 | 17.51 |
| 23 | 103.70 | 19.09 |
| Intersleek Pro | 110.7 | 16.7 |

**Table 6. Hydrophobicity and critical surface energy determination results for nanocomposite fouling release coatings with additives containing modified nanoparticles.**

| **Example** | **H₂O contact angle(°)** | **Critical surface energy (mN/m)** |
|---|---|---|
| 25 | 103.00 | 18.65 |
| 26 | 105.63 | 20.13 |
| 27 | 105.10 | 17.82 |
| 28 | 108.26 | 18.64 |
| 29 | 105.92 | 20.30 |
| 30 | 102.37 | 20.50 |
| 31 | 104.05 | 18.40 |
| 32 | 98.60 | 10.30 |
| 33 | 106.40 | 9.65 |
| 34 | 98.91 | 20.38 |
| 35 | 103.55 | 18.87 |

It can be observed that hydrophobicity values and also the critical surface energy are in par with those of the commercially available product.

### Mechanical properties of nanocomposite fouling release coatings

The nanocomposite fouling release coatings characterization as to their flexibility/ resistance to cracking and deformation was conducted according to the standards ASTM D0522-93AR01 *"Test Methods for Mandrel Bend Test of Attached Organic Coatings"* and ASTM D2794-93R04 *"Test Method for Resistance of Organic Coatings to the Effects of Rapid Deformation (Impact)"* respectively. Specifically, impact and elasticity tests for all coatings are performed.

For conical mandrel test (elasticity), the mandrel diameter at which cracking ceased is taken as the resistance to cracking value according to the ASTM D522 standard. The larger value indicates less elastic coating. The diameter of the small end of the mandrel is 5 mm (reference point), thus resistance to cracking value is 5 mm means that there is no cracking.

For the impact test, a 7 kg weight was dropped from 10 cm height for all samples and subsequently the degree of cracking was monitored.

Results are summarized in table 7 and reveal exceptional mechanical properties for all fouling release coatings. Specifically, in all coatings no cracking are observed while the elasticity results are excellent and are similar to the commercial product (Intersleek).

**Table 7. Mechanical properties determination results for nanocomposite fouling release coatings with additives containing modified nanoparticles.**

| **Example** | **Resistance To Cracking Value (mm)** | **Cracking** |
|---|---|---|
| 1 | 5.8 | No |
| 4 | 5.9 | No |
| 5 | 5.0 | No |
| 6 | 5.2 | No |
| 7 | 5.8 | No |
| 9 | 5.0 | No |
| 11 | 5.8 | No |
| 12 | 5.8 | No |
| 13 | 5.3 | No |
| 14 | 5.7 | No |
| 15 | 7.5 | No |
| 16 | 5.8 | No |
| 17 | 6.6 | No |
| 18 | 5.0 | No |
| 19 | 5.6 | No |
| 20 | 5.5 | No |
| 21 | 5.9 | No |
| 22 | 6.2 | No |
| 23 | 6.1 | No |
| 24 | 5.8 | No |
| 25 | 6.2 | No |
| 26 | 6.1 | No |
| 27 | 5.7 | No |
| 28 | 5.4 | No |
| 29 | 5.0 | No |
| 30 | 5.9 | No |
| 31 | 6.0 | No |
| 32 | 5.1 | No |
| 33 | 5.0 | No |
| 34 | 5.1 | No |
| 35 | 5.0 | No |
| Intersleek Pro | 6.0 | No |

Moreover, scratch resistance measurements revealed the effectiveness of the as prepared coatings that like all epoxy based paints exhibit excellent scratch resistance properties. In contrast, the commercial product based on silicone (PDMS) - a soft material-shows increased wear. From the cleaning tests the commercial material was vulnerable to mechanical cleaning while the developed nanocomposite coatings revealed excellent resistance.

### Evaluation of fouling release properties.

In order for coatings to be evaluated as to their marine fouling attachment inhibition properties, sea immersion tests were performed during the summer periods of increased fouling activity. The Marmara region (Turkey), characterised by a wide variety of heavy biofouling organisms was selected as the testing site.

Measurements were performed on six (6) specimens for every coating type for statistical purposes. Specimens were suitably coated onto primed 200x100 mm metal plates and were left for fifteen (15) days in ambient conditions before measurement.

The specimens were immersed in the sea suitably oriented and were left for fifteen (15) days. The specimens were then taken out of the water and were evaluated as to fouling quantity and ease of their removal.

For the evaluation, plates were placed on a rotating device so as to simulate a speed of 4 knots, immersed in seawater. After 10 mins of rotation, the specimens were examined as to the reduction of attached biofouling. Subsequently, specimens were immersed in the sea for another fifteen (15) days until their next evaluation. Such evaluation cycles were performed three (3) times and the results can be seen in table 8.

The samples were graded on a scale from 1 to 5, with 5 being the highest degree of removal difficulty. Coatings with the lowest grades (1-2) can be used in marine fouling release applications.

**Table 8. Fouling release performance for nanocomposite coatings with additives containing modified nanoparticles.**

| **Example** | **Fouling release performance** |
|---|---|
| 1 | 3 |
| 2 | 2 |
| 3 | 1-2 |
| 4 | 1 |
| 5 | 2 |
| 6 | 1-2 |
| 7 | 2 |
| 8 | 2 |
| 9 | 2 |
| 10 | 1-2 |
| 11 | 2-3 |
| 12 | 2 |
| 13 | 1 |
| 14 | 3 |
| 15 | 2 |
| 16 | 1-2 |
| 17 | 2 |
| 18 | 1-2 |
| 19 | 2 |
| 20 | 1-2 |
| 21 | 2 |
| 22 | 1-2 |
| 23 | 2 |
| 24 | 2 |
| 25 | 2 |
| 26 | 1-2 |
| 27 | 2 |
| 28 | 1-2 |
| 29 | 2 |
| 30 | 1-2 |
| 31 | 1 |
| 32 | 2 |
| 33 | 1 |
| 34 | 2 |
| Intersleek Pro | 1 |

It can be observed that fouling release performance of surfaces coated with the novel fouling release coatings described in the present invention are comparable to that of the commercial product.

### Advantages of the nanocomposite fouling release paints.

The nanocomposite 3^{rd} generation fouling release paints described in the present invention are environmentally friendly, releasing no biocides into the marine environment as the added nanoparticles participate themselves in the curing of epoxy resins. Unlike most of the commercially available materials (1^{st} and 2^{nd} generation coatings) they comply with present and future European and International regulations. Moreover, compared to commercially available 3^{rd} generation fouling release paints they exhibit comparable or increased antifouling or fouling release behavior even at low operational speeds (8-10 knots) as well as increased mechanical strength and scratch resistance.

The use of epoxy resins offers enhanced surface appearance and finish, in a wide variety of colors compared to the silicon (PDMS) based products and can be easily cleaned with all currently used techniques (underwater manual cleaning, sandblast, water jets, etc.)

The nanocomposite paints of the present invention offer better spreading capacity which in combination with the reduced cost results in a considerable market price reduction of up to 70-80%. Moreover, compatibility with conventional primers reduces vessels' docking time (which greatly affects cost) as no hull pre-treatment is needed previous to their application.

From the end user point of view, it is particularly advantageous that the new fouling release paints increase hull protection, offer decreased fuel consumption of about 4-8%, improved durability (up to 3 years) and longer periods between cleaning/repainting.

Following their commercialization, both shipyards and boat owners will benefit from these foul-release coatings. Shipyards and marine equipment industry will prefer to use them for their ease of application (single coat / direct application on primer -bypassing the need for a tie coat), and their cost-effective cleaning compared to other foul-release systems. Vessels' owners on the other hand, will prefer these coatings for their reduced fuel cost, unlimited color choice and improved mechanical strength. By using these biocide free coatings vessels' owners will be compliant with present and future regulations. In the following table, the advantages of the novel nanocomposite fouling release coatings are summarized in comparison to the commercially available silicone (PDMS) based materials.

**Table 9- Commercially available silicone based (PDMS) fouling release materials compared to the nanocomposite fouling release paints of the present invention.**

| **Product** | **Intersleek Pro^{xxvii}** | **Sigmaglide 990^{xxviii}** | **Hempasil X3^{xxix}** | **Innovative nanocomposite Paints** |
|---|---|---|---|---|
| **Base** | Silicone | Silicone | Silicone | Epoxy resin |
| **Product** | **Intersleek Pro^{xxx}** | **Sigmaglide 990^{xxxi}** | **Hempasil X3^{xxxii}** | **Innovative nanocomposite Paints** |
| **Reference/ producer** | International - AkzoNobel www.akzonobel.c om | PPG www.ppg.com | Hempel www.hempel.c om | Present invention |
| **Color** | White, blue, black | Dark blue, dark red | red | Clear, red, blue, gray, black |
| **Desired coating thickness** | 150 µm | 180µm | 150 µm | 50-70 µm |
| **Spreading capacity** | 4.9 m²/l | 4.4 m²/l | 4.7 m²/l | 8.5 m²/lt |
| **Price (€/Lt)** | 110-120 € | 70-75 € | 60-70€ | 15-20 € |
| **Price (€/m²)** | 22,5-24.5€ | 15,9-17,0 € | 12,7-14,9 € | 1,75-2,35 € |
| **Cost per ship (∼15m)** | 1.450 € | 1.010 € | 850 € | 130 € |

### References

i Sapozhnikova, Y., Wirth, E., Schiff, K., Brown, J., Fulton, M., Antifouling pesticides in the coastal waters of Southern California. Mar. Pollut. Bull. 2000, 754, 1972-1978.
ii Eguchi, S., Harino, H., Yamamoto, Y., Assessment of antifouling biocides contaminations in Maizuru Bay, Japan. Arch. Environ. Contam. Toxicol. 2010, 58, 684-693.
iii Bannink, A.D., How Dutch drinking water production is affected by the use of herbicides on pavements. Water Sci. Technol. 2004, 49, 173-181.
iv Walker W.W., Biological and abiotic degradation of xenobiotic compounds in in-vitro estuarine water and sediment/ water systems. Chemosphere, Cripe CR, Prichard PH., 1998, 17, 2255- 2271.
v Thomas, K.V., The environmental fate and behaviour of antifouling paint booster biocides: A review. Biofouling 2001, 17, 73-86.
vi Lindholdt A., Dam-Johansen K., Olsen S.M., Yebra D.M., Kiil S., Effects of biofouling development on drag forces of hull coatings for ocean-going ships: A review J. Coat. Technol. Res., 2015, 12, 415-444.
vii Burgess, J.G., Boyd, K.G., Armstrong, E., Jiang, Z., Yan, L., Berggren, M., May, U., Pisacane, T., Granmo, Ã, Adams, D.R., The development of a marine natural product based antifouling paint. Biofouling 2003, 19, 197-205.
viii Albanis T.A., Readman J.W.,Hattum B.van.,Barcelo D., Riemann B., Blank H., Gustarson K., Tronczynski J., Jacobson A., Assessment of antifouling Agents in Coastal Environments (ACE) 2002, (MAS3-CT98-0178).
ix Kiil, S, Weinell, C.E, Pedersen, M.S, Dam-Johansen, K, Analysis of Self-polishing Antifouling Paints Using Rotary Experiments and Mathematical Modelling. Ind. Eng. Chem. Res., 2001, 40 3906-3920.
x Kiil, S, Dam-Johansen, K, Weinell, C.E, Pedersen, M.S, Codolar, S.A., Dynamic Simulations of a Self-polishing Antifouling Paint Exposed to Seawater. J. Coat. Technol., 2002, 74, 45-54.
xi Monfared, H, Sharif, F., Design Guidelines for Development of Tin-Free Antifouling Self-polishing Coatings Using Simulation. Prog. Org. Coat., 2008, 63, 79-86.
xii Yebra, D.M, Kiil, S, Dam-Johansen, K., Antifouling Technology- Past, Present and Future Steps Towards Efficient and Environmentally Friendly Antifouling Coatings. Prog. Org. Coat., 2004, 50, 75-104.
xiii Almeida, E., Diamantino, T.C., de Sousa, O., Marine Paints: The Particular Case of Antifouling Paints. Prog. Org. Coat., 2007, 59, 2-20.
xiv Det Norske Veritas (DNV), 2010 [cited on 2014, June 3] http://www.dnv.com/industry/maritime/publicationsanddownloads/publications/dnvcoatainershiupdate/2010/- 2010/75yearsthecoatingchallenge.asp.
xv Martinez, K., Ferrer, I., Barcelo, D., Part-per-trillion level determination of antifouling pesticides and their byproducts in seawater samples by off-line solid-phase extraction followed by high-performance liquid chromatography atmospheric pressure chemical ionization mass spectrometry. J. Chromatogr. A 2000, 879, 27-37.
xvi Tolhurst, L.E., Barry, J., Dyer, R.A., Thomas, K.V., 2007. The effect of resuspending sediment contaminated with antifouling paint particles containing Irgarol 1051 on the marine macrophyte Ulva intestinalis. Chemosphere 68, 1519-1524.
xvii Meena, R., Garg, A., Jadhav, S., Seasonal variation in organotins in the waters of the Dona Paula Bay, West Coast of India. Bull. Environ. Contam. Toxicol. 2009, 82, 586-589.
xviii Kovach, B.S, Swain, G., A Boat-Mounted Foil to Measure the Drag Properties of Antifouling Coatings Applied to Static Immersion Panels. Proc. Int. Symp. Seawater Drag Reduction, Newport, RI, 1998.
xix Lejars, M., Margaillan, A., Bressy, C., Fouling Release Coatings: A Nontoxic Alternative To Biocidal Antifouling Coatings. Chem. Rev., 2012, 112, 4347-4390.
xx Townsin, R, Anderson, C., 2009, Fouling Control Using Low Surface Energy, Foul Release Technology In: Advances in Marine Antifouling Coatings and Technologies, pp. 693-708. Woodhead Publishers, Cambridge,
xxi Tziveleka, L.-A., G. Psarra, A.-M., Tsiourvas, D., Paleos, C.M., Synthesis and characterization of guanidinylated poly(propylene imine) dendrimers as gene transfection agents, J. Controlled Release, 2007, 117, 137-146.
xxii Sideratou, Z., Tsiourvas, D., Paleos, C.M., Quaternized Poly(propylene imine) Dendrimers as Novel pH-Sensitive Controlled-Release Systems, Langmuir, 2000, 16, 1766-1769.
xxiii Arkas, M., Tsiourvas, D., Organic/inorganic hybrid nanospheres based on hyperbranched poly(ethylene imine) encapsulated into silica for the sorption of toxic metal ions and polycyclic aromatic hydrocarbons from water, J. Hazardous Mat., 2009, 170, 35-42.
xxiv Lin X., Ju X., Xie R., Jiang M., Wei J., Chu L., Halloysite Nanotube Composited Thermo-responsive Hydrogel System for Controlled-release, Chinese Journal of Chemical Engineering, 2013, 21, 991-998.
xxv Zisman, W.A., Relation of equilibrium contact angle to liquid and solid constitution: in Contact Angle, Wettability and Adhesion, Advances in Chemistry Series, American Chemical Society, 1964, 43, 1-51.
xxvi Baier, R.E., Surface behaviour of biomaterials: The theta surface for biocompatibility J. Mater. Sci: Mater. Med., 2006, 17, 1057-1062.
xxvii www.yachtpaint.com/.../intersleek-pro-app-manual-interlux-eng.pdf
xxviii www.newguardcoatings.com/files/mydocs/Sigmaglide%20990.pdf
xxix http://www.hempel.com/en/products/hempasil-x3-87500
xxx www.yachtpaint.com/.../intersleek-pro-app-manual-interlux-eng.pdf
xxxi www.newguardcoatings.com/files/mydocs/Sigmaglide%20990.pdf
xxxii http://www.hempel.com/en/products/hempasil-x3-87500

## Claims

1. Nanocomposite paints with micro slime layer control properties in the form of fouling release coatings, which are two-part epoxy coatings where the first part is the epoxy resin (component A) and the second part is the curing agent (hardener) which contains aromatic- and/or alkyl- functionalized polyamines (component B) Where the hardener is modified with
- hydrophobic nanoparticles based on hyperbranched dendritic polymers with symmetric or asymmetric architecture or
- inorganic nanoparticles decorated with hydrophobic moieties,
**characterized in that** the hydrophobic polymeric nanoparticles used to modify component B, comprise functionalized dendritic polymers with symmetrical or asymmetrical architecture, derived from commercially available dendritic polymers, such as:
• Hyperbranched polyethylenimine with molecular weight 400-750.000 Da,
• Diaminobutane propyleneimine dendrimers (DAB) with molecular weight 200-7.000 Da,
• Poly(amido amine) (PAMAM) dendrimers with molecular weight 200-150.000 Da,
• Hyperbranched dendritic polyglycerols with molecular weight 200-100.000 Da
• Hyperbranched dendritic polyesters with molecular weight 200-200.000 Da
• other dendritic polymers exhibiting similar characteristics,
which are functionalized with hydrophobic groups such as alkyl chains with 8 to 22 carbon atoms or fluoroalkyl chains with 11 to 45 fluoro atoms or other hydrophobic groups, at 40-100% molecular coverage.
wherein such nanocomposite paints are used as fouling release coating applied to objects submerged in water such as the vessel hulls, sea platforms, bridge, underwater structures (e.g. propeller, aquaculture chambers) etc

2. Nanocomposite fouling release paints according to claim 1 which comprise nanoparticles at a percentage ranging from 0.5% to 40%.

3. Nanocomposite fouling release paints according to claims 1 and 2, where the component A and the component B are mixed at a weight ratio ranging from 1: 0.5 to 1: 2.

4. Nanocomposite fouling release paints according to any one of claims 1 to 3 which have final viscosity 1200-1600 mPa.s.

5. Nanocomposite fouling release paints according to any one of claims 1 to 4 where the hydrophobic inorganic nanoparticles that used for component B modification, comprise metal or metal oxide nanoparticles or mixed metal oxide nanoparticles, which contain hydrophobic groups such as alkyl chains with 8 to 22 carbon atoms or fluoroalkyl chains with 11 to 45 fluoro atoms or other hydrophobic groups, at 40-100% molecular coverage.

6. Nanocomposite fouling release paints according to any one of claims 1 to 5 where
- the functionalized dendritic polymer that is used to modify component B can be hydrophobic nanoparticles based on
- the alkylated hyperbranched polyethyleneimine (A-PEI) or
- the perfluoroalkylated hyperbranched polyethyleneimine (F-PEI) or
- derivatives of the alkylated polyethyleneimine bearing guanidinium groups (G-A-PEI) or
- derivatives of the alkylated hyperbranched polyethyleneimine bearing oligoethylenoglycol groups (OEG-A-PEI) or
- derivatives of the alkylated hyperbranched polyethyleneimine bearing quaternary ammonium groups (Q-A-PEI),
or can be amphiphilic nanoparticles based on
- the alkylated hyperbranched polyglycerol (A-PG) or
- the perfluoroalkylated hyperbranched polyglycerol (F-PG),
- while the inorganic nanoparticles that used to modify the component B can be
- silica nanoparticles functionalized with perfluoroalkyl chains (F-silica) or
- silica nanoparticles functionalized with alkylated quaternary ammonium groups (Q-silica) or
- Polyhedral oligomeric silsesquioxane functionalized with lipophilic groups (A-POSS) or
- Halloysites inorganic nanotubes functionalized with perfluoroalkyl chains (F-Hal) or
- Halloysites inorganic nanotubes functionalized with alkylated quaternary ammonium groups (Q-Hal).

7. Nanocomposite fouling release paints according to any one of claims 1 to 5 where the component A
- is epoxy resin which is derivative of bisphenol A or bisphenol F,
- can contain or cannot contain additives,
which can be phthalocyanine blue or carbon black or talc or calcium phosphate or titanium oxide or any organic solvent compatible with the epoxy resin such as xylene, benzyl alcohol, etc.

8. Use of nanocomposite fouling release paints according to any one of claims 1 to 7, which can be applied by spray gun or roll or brush and the coating thickness is varied from 50 to 70 µm after curing (dry layer) and the critical surface energy is varied from 10 to 23 mN/m.

## Patentansprüche

1. Nanokompositlacke mit Mikroschleimschichteigenschaften in Form von Fouling-Release-Beschichtungen, die zweiteilige Epoxidbeschichtungen sind, wobei der erste Teil das Epoxidharz (Komponente A) und der zweite Teil das Aushärtungsmittel (der Härter) ist, der aromatische und/oder alkylfunktionalisierte Polyamine enthält (Komponente B) wobei der Härter mit
- hydrophoben Nanopartikeln auf Basis von hyperverzweigten dendritischen Polymeren mit symmetrischer oder asymmetrischer Architektur oder
- anorganischen Nanopartikeln, die mit hydrophoben Bestandteilen dekoriert sind, modifiziert ist
**dadurch gekennzeichnet, dass** die hydrophoben polymeren Nanopartikel, die zur Modifizierung der Komponente B verwendet werden, funktionalisierte dendritische Polymere mit symmetrischer oder asymmetrischer Architektur umfassen, die von im Handel erhältlichen dendritischen Polymeren abgeleitet sind, wie z.B.:
• Hyperverzweigte Polyethylenimine mit einem Molekulargewicht von 400-750.000 Da,
• Diaminobutanpropylenimindendrimere (DAB) mit einem Molekulargewicht von 200-7.000 Da,
• Poly(amidoamin) (PAMAM) Dendrimere mit einem Molekulargewicht von 200-150.000 Da,
• Hyperverzweigte dendritische Polyglycerine mit einem Molekulargewicht von 200-100.000 Da
• Hyperverzweigte dendritische Polyester mit einem Molekulargewicht von 200-200.000 Da
• andere dendritische Polymere, die ähnliche Eigenschaften aufweisen,
die mit hydrophoben Gruppen wie Alkylketten mit 8 bis 22 Kohlenstoffatomen oder Fluoralkylketten mit 11 bis 45 Fluoratomen oder anderen hydrophoben Gruppen, bei einer Molekularbedeckung von 40-100% funktionalisiert sind,
wobei solche Nanokompositlacke als Fouling-Release Beschichtung für in Wasser getauchte Objekte wie Schiffsrümpfe, Seeplattformen, Brücken, Unterwasserstrukturen (z. B. Propeller, Aquakulturkammern) usw. verwendet werden.

2. Nanokomposit-Fouling-Release-Lacke nach Anspruch 1, die Nanopartikel in einem Anteil von 0,5 % bis 40 % enthalten.

3. Nanokomposit-Fouling-Release-Lacke nach den Ansprüchen 1 und 2, bei denen die Komponente A und die Komponente B in einem Gewichtsverhältnis von 1: 0,5 bis 1: 2 gemischt sind.

4. Nanokomposit-Fouling-Release-Lacke nach einem der Ansprüche 1 bis 3 mit einer Endviskosität von 1200-1600 mPa.s.

5. Nanokomposit-Fouling-Release-Lacke nach einem der Ansprüche 1 bis 4, wobei die hydrophoben anorganischen Nanopartikel, die zur Modifizierung der Komponente B verwendet werden, Metall- oder Metalloxid-Nanopartikel oder gemischte Metalloxid-Nanopartikel umfassen,
die hydrophobe Gruppen, wie z.B. Alkylketten mit 8 bis 22 Kohlenstoffatomen oder Fluoralkylketten mit 11 bis 45 Fluoratomen oder andere hydrophobe Gruppen, mit einer molekularen Bedeckung von 40-100% enthalten.

6. Nanokomposit-Fouling-Release-Lacke nach einem der Ansprüche 1 bis 5, wobei
- das funktionalisierte dendritische Polymer, das zur Modifizierung der Komponente B verwendet wird, kann
hydrophobe Nanopartikel auf Basis von
- dem alkylierten hyperverzweigten Polyethylenimin (A-PEI) oder
- dem perfluoralkylierten, hyperverzweigten Polyethylenimin (F-PEI) oder
- Derivate des alkylierten Polyethylenimins mit Guanidiniumgruppen (G-A-PEI) oder
- Derivate des alkylierten hyperverzweigten Polyethylenimins mit Oligoethylenoglykolgruppen (OEG-A-PEI) oder
Derivate des alkylierten hyperverzweigten Polyethylenimins, die quaternäre Ammoniumgruppen tragen (Q-A-PEI), sein
oder amphiphile Nanopartikel, die auf
- dem alkylierten hyperverzweigten Polyglycerin (A-PG) oder
- dem perfluoralkylierten, hyperverzweigten Polyglycerin (F-PG) basieren, sein kann
- während die anorganischen Nanopartikel, die zur Modifizierung der Komponente B verwendet werden,
- mit Perfluoralkylketten funktionalisierte Siliziumdioxid-Nanopartikel (F-Siliziumdioxid) oder
- Siliziumdioxid-Nanopartikel, die mit alkylierten quaternären Ammoniumgruppen funktionalisiert sind (Q-Siliziumdioxid) oder
- Polyedrische oligomere Silsesquioxane, die mit lipophilen Gruppen funktionalisiert sind (A-POSS) - oder
- Anorganische Halloysit-Nanoröhrchen, die mit Perfluoralkylketten funktionalisiert sind (F-Hal) oder
- anorganische Halloysit-Nanoröhrchen, die mit alkylierten quaternären Ammoniumgruppen funktionalisiert sind (Q-Hal), sein können.

7. Nanokomposit-Fouling-Release-Lacke nach einem der Ansprüche 1 bis 5, wobei die Komponente A
- ein Epoxidharz ist, das ein Derivat von Bisphenol A oder Bisphenol F ist,
- Additive enthalten oder nicht enthalten kann,
die Phthalocyaninblau oder Ruß oder Talk oder Kalziumphosphat oder Titanoxid oder jedes mit dem Epoxidharz verträgliche organische Lösungsmittel wie Xylol, Benzylalkohol usw. sein können.

8. Verwendung von Nanokomposit-Fouling-Release-Lacken nach einem der Ansprüche 1 bis 7, die mit einer Spritzpistole, einer Rolle oder einem Pinsel aufgetragen werden können, wobei die Schichtdicke nach dem Aushärten (Trockenschicht) zwischen 50 und 70 µm variiert und die kritische Oberflächenenergie zwischen 10 und 23 mN/m variiert.

## Revendications

1. Peintures nanocomposites ayant des propriétés de contrôle de la micro-couche de boue sous la forme de revêtements pour libération de l'encrassement, qui sont des revêtements époxy en deux parties dont la première partie est la résine époxy (composant A) et la seconde partie est l'agent de durcissement (durcisseur) qui contient des polyamines fonctionnalisées aromatiques et/ou alkyles (composant B),
ou le durcisseur est modifié par
- des nanoparticules hydrophobes à base de polymères dendritiques hyperbranchés à architecture symétrique ou asymétrique, ou
- des nanoparticules inorganiques décorées de motifs hydrophobes,
**caractérisés par le fait que** les nanoparticules polymères hydrophobes utilisées pour modifier le composant B comprennent des polymères dendritiques fonctionnalisés à architecture symétrique ou asymétrique, dérivés de polymères dendritiques disponibles dans le commerce, tels que :
• Polyéthylèneimine hyperbranchée d'un poids moléculaire de 400 à 750.000 Da,
• Dendrimères de diaminobutane propylèneimine (DAB) d'une masse moléculaire de 200 à 7000 Da,
• Dendrimères de poly(amido amine) (PAMAM) avec un poids moléculaire de 200-150.000 Da,
• Polyglycérols dendritiques hyperbranchés d'une masse moléculaire de 200 à 100 000 Da
• polyesters dendritiques hyperbranchés d'une masse moléculaire de 200 à 200 000 Da
• d'autres polymères dendritiques présentant des caractéristiques similaires,
qui sont fonctionnalisés avec des groupes hydrophobes tels que des chaînes d'alkyle avec 8 à 22 atomes de carbone ou des chaînes de fluoroalkyle avec 11 à 45 atomes de fluoro ou d'autres groupes hydrophobes, à une couverture moléculaire de 40 à 100 %
ou ces peintures nanocomposites sont utilisées comme revêtement libération de l'encrassement sur des objets immergés dans l'eau tels que les coques de navires, les plates-formes maritimes, les ponts, les structures sous-marines (par exemple, les hélices, les chambres d'aquaculture), etc.

2. Peintures nanocomposites pour libération de l'encrassement selon la revendication 1 qui comprennent des nanoparticules à un pourcentage allant de 0.5 % à 40 %.

3. Peintures nanocomposites pour libération de l'encrassement selon les revendications 1 et 2, où le composant A et le composant B sont mélangés à un rapport pondéral allant de 1: 0.5 à 1:2.

4. Peintures nanocomposites pour libération de l'encrassement selon l'une des revendications 1 à 3, dont la viscosité finale est comprise entre 1200 et 1600 mPa.s.

5. Peintures nanocomposites pour libération de l'encrassement selon l'une quelconque des revendications 1 à 4 où les nanoparticules inorganiques hydrophobes utilisées pour la modification du composant B, comprennent des nanoparticules métalliques ou d'oxyde métallique ou des nanoparticules d'oxyde métallique mixte,
qui contiennent des groupes hydrophobes tels que des chaînes alkyles avec 8 à 22 atomes de carbone ou des chaînes fluoroalkyles avec 11 à 45 atomes fluorés ou d'autres groupes hydrophobes, à une couverture moléculaire de 40 à 100%.

6. Peintures nanocomposites pour libération de l'encrassement selon l'une des revendications 1 à 5 où
- le polymère dendritique fonctionnalisé utilisé pour modifier le composant B peut être des nanoparticules hydrophobes à base de
- le polyéthylèneimine hyperbranchée alkylée (A-PEI) ou
- la polyéthylèneimine hyperbranchée perfluoroalkylée (F-PEI) ou
- les dérivés de la polyéthylèneimine alkylée portant des groupes guanidinium (G-A-PEI) ou
- des dérivés de la polyéthylèneimine alkylée hyperbranchée portant des groupes oligoéthylèneglycol (OEG-A-PEI) ou
- des dérivés de la polyéthylèneimine alkylée hyperbranchée portant des groupes ammonium quaternaire (Q-A-PEI),
ou peuvent être des nanoparticules amphiphiles à base de
- le polyglycérol hyperbranché alkylé (A-PG) ou
- le polyglycérol hyperbranché alkylé perfluoro (F-PG),
- tandis que les nanoparticules inorganiques qui modifient le composant B peuvent être
- nanoparticules de silice fonctionnalisées avec des chaînes perfluoroalkyles (F-silice) ou
- nanoparticules de silice fonctionnalisées avec des groupes ammonium quaternaire alkylé (Q-silice) ou
- Silsesquioxane oligomère polyédrique fonctionnalisé avec des groupes lipophiles (A-POSS) ou
- des nanotubes inorganiques d'halloysites fonctionnalisés avec des chaînes perfluoroalkyles (F-Hal) ou
- Nanotubes inorganiques d'halloysites fonctionnalisés avec des groupes ammonium quaternaire alkylé (Q-Hal).

7. Peintures nanocomposites pour libération de l'encrassement selon l'une quelconque des revendications 1 à 5, où le composant A
- est une résine époxy dérivée du bisphénol A ou du bisphénol F,
- peut contenir ou non des additifs,
qui peuvent être du bleu de phtalocyanine ou du noir de carbone ou du talc ou du phosphate de calcium ou de l'oxyde de titane ou tout solvant organique compatible avec la résine époxyde tel que le xylène, l'alcool benzylique, etc.

8. Utilisation de peintures nanocomposite pour libération de l'encrassement selon l'une quelconque des revendications 1 à 7, qui peuvent être appliquées au pistolet ou au rouleau ou au pinceau et dont l'épaisseur du revêtement varie de 50 à 70 µm après durcissement (couche sèche) et dont l'énergie de surface critique varie de 10 à 23 mN/m.
